# EUROPEAN PATENT APPLICATION

(11) **EP 4 029 737 A1**
(43) Date of publication of application: **20.07.2022**
(21) Application number: 21166710.0
(22) Date of filing: 01.04.2021
(51) Int. Cl.: B60R 16/037

(54) **VEHICLE FUNCTION CONTROL METHOD AND APPARATUS**

(30) Priority: 15.01.2021 IN 202111001902
(71) Applicant: NXP B.V., 5656 AG Eindhoven (NL)
(72) Inventor: Meijer, Rinze Ida Mechtildis Peter, Redhill, RH1 1QZ (GB); Rajan Kesavelu Shekar, Pramod, Redhill, RH1 1QZ (GB)
(74) Representative: Miles, John Richard

(57) **Abstract**

A method and apparatus for vehicle function control using short-range radio communications is described. A wearable device is configured to be wirelessly coupled to a seat transceiver including a near field radio transceiver. The seat transceiver is coupled to a vehicle function controller and located in a position corresponding to a vehicle seat. The wearable device includes a wireless transceiver configured as a near field radio transceiver, a processor coupled to the wireless transceiver and at least one memory configured to store a user identifier. In operation, the processor receives a request from the seat transceiver via the wireless transceiver. Once a request is received the processor transmits an acknowledge comprising the user identifier via the wireless transceiver. The user identifier is used for authentication of the user by the vehicle function controller. The vehicle function controller enables one or more user-controlled vehicle functions dependent on the authentication.

## Description

### FIELD

This disclosure relates to a method and apparatus for vehicle function control using short-range radio communications.

### BACKGROUND

Vehicle function control systems may use cameras or voice recognition to identify users in the vehicle. This may allow car drivers or other passengers to communicate with a virtual personal assistant to control in-car infotainment systems or other vehicle functions.

### SUMMARY

Various aspects of the disclosure are defined in the accompanying claims. In a first aspect there is provided a wearable device configured to be wirelessly coupled to a seat transceiver comprising a near field radio transceiver and located in a position corresponding to a vehicle seat, the seat transceiver being coupled to a vehicle function controller, the wearable device comprising: a wireless transceiver configured as a near field radio transceiver; a processor coupled to the wireless transceiver; at least one memory configured to store a user identifier; wherein the processor is configured to receive a request from the seat transceiver via the wireless transceiver and in response to transmit an acknowledge comprising the user identifier via the wireless transceiver for authentication of the user by the vehicle function controller to enable one or more user-controlled vehicle functions dependent on the authentication.

In one or more embodiments a wireless transceiver may be configured as one of a near field magnetic induction (NFMI) transceiver and a near field electromagnetic induction (NFEMI) transceiver.

In one or more embodiments, the at least one memory may be further configured to store at least one vehicle identifier, and at least one seat type identifier; and wherein the wearable device is further configured to receive a vehicle identifier and a seat type identifier via the wireless transceiver and the processor is configured to compare the received vehicle identifier and seat identifier with the at least one vehicle and seat type identifiers and to transmit user configuration parameters via the wireless transceiver corresponding to the received vehicle identifier and seat type identifier.

In one or more embodiments, the user configuration parameters may comprise at least one of seating control parameters, mirror control parameters, lighting control parameters, multimedia control parameters and navigation control parameters.

In a second aspect, there is provided a vehicle function control system comprising: a seat transceiver configured to be located in a position corresponding to a vehicle seat and further configured to be wirelessly coupled to a wearable device, the seat transceiver comprising a near field radio transceiver; and a vehicle function controller coupled to the seat transceiver and configured to be coupled to one or more vehicle actuators; wherein the seat transceiver is configured to transmit a request via the near field radio transceiver, to receive an acknowledge comprising a user identifier from the wearable device and transmit the acknowledge to the vehicle function controller; and wherein the vehicle function controller is configured to: authenticate the user; and enable at least one user-controlled vehicle function dependent on the authentication.

In one or more embodiments, the seat transceiver may comprise at least one memory configured to store the vehicle identifier, and the seat type identifier; and wherein the seat transceiver is further configured to transmit the vehicle identifier and the seat type identifier via the wireless transceiver and to receive user configuration parameters from the wearable device corresponding to the vehicle identifier and seat type identifier.

In one or more embodiments, the vehicle function controller may be configured to enable user-control of at least one of a seat lumbar support, seat position, mirror position, internal vehicle lighting, a multimedia system and a navigation system dependent on the user configuration parameters.

In one or more embodiments, the vehicle function controller may be further configured to compare the user identifier with a list of authenticated users and allow access to vehicle functions based on the authentication level defined for the user in the authenticated user list.

In one or more embodiments, wherein the near field radio transceiver of the seat transceiver may be configured as one of a near field magnetic induction (NFMI) transceiver and a near field electromagnetic induction (NFEMI) transceiver.

In one or more embodiments, an apparatus for vehicle function control by a user occupying a vehicle seat may include a wearable device and a vehicle function control system.

In a third aspect there is provided a method of vehicle function control by a user occupying a vehicle seat using a vehicle function controller coupled to a seat transceiver located in a position corresponding to the vehicle seat and a wearable device, the seat transceiver and the wearable device each comprising a near-field radio transceiver, the method comprising: transmitting a request by the seat transceiver; receiving the request by the wearable device; transmitting an acknowledge comprising a user identifier by the wearable device; receiving the acknowledge by the seat transceiver; providing the user identifier to the vehicle function controller; authenticating the user from the user identifier; and enabling one or more user controlled vehicle functions dependent on the user authentication.

In one or more embodiments, the acknowledge may further comprise user configuration parameters associated with at least one of a vehicle identifier and a seat identifier.

In one or more embodiments, the one or more user controlled vehicle functions may comprise at least one of: a seat position, mirror position, internal vehicle lighting, a multimedia system and a navigation system.

The near-field radio transceiver may comprises at least one of a NFMI transceiver and a NFEMI transceiver.

In one or more embodiments, authenticating the acknowledge may further comprise determining an authentication level of the user from the user identifier and enabling user controlled vehicle functions based on the authentication level.

In one or more embodiments, the vehicle function controller may comprise a RF transceiver and the wearable device may comprises a RF transceiver and the method further comprises wirelessly coupling the vehicle function controller to the wearable device following user authentication and transmitting further data between the vehicle function controller and the wearable device.

In one or more embodiments, the method may further comprise controlling one or more of a seat lumbar support, seat position, mirror position, vehicle lighting, multimedia settings, and navigation settings depending on the user configuration parameters.

In one or more embodiments, the method may further comprise controlling one or more of a seat lumbar support, seat position, mirror position, vehicle lighting, multimedia settings, and navigation settings depending on the user authentication level.

In one or more embodiments, providing the user identifier to the vehicle function controller may further comprise assembling the user identifier and a seat identifier into a special instruction and transmitting the special instruction to the vehicle function controller.

In one or more embodiments, the method may further comprise providing seat user interface inputs to the vehicle function controller.

### BRIEF DESCRIPTION OF THE DRAWINGS

In the figures and description like reference numerals refer to like features. Embodiments are now described in detail, by way of example only, illustrated by the accompanying drawings in which:
Figure 1 Shows a car including a vehicle function control system according to an embodiment.
Figure 2A illustrates an example implementation of a wearable device.
Figure 2B illustrates an example implementation of a seat transceiver.
Figure 3 illustrates a method of vehicle function control by a user wearing a wearable device when occupying a vehicle seat according to an embodiment.
Figure 4 shows a vehicle function control system according to an embodiment.
Figure 5 shows a vehicle function controller according to an embodiment.
Figure 6 shows a method of data communication between a car seat included as part of a vehicle function control system and a wearable device according to an embodiment.
Figure 7 shows an example data packet frame for data from the wearable to the smart car seat.
Figure 8 shows an example special instruction data packet frame.
Figure 9 shows an example normal data packet frame.
Figure 10 shows a method of authentication implemented by the vehicle function controller of figure 5.
Figure 11 shows an example method for configuring individual functional units in the car using the vehicle function controller of figure 5.

### DETAILED DESCRIPTION OF EMBODIMENTS

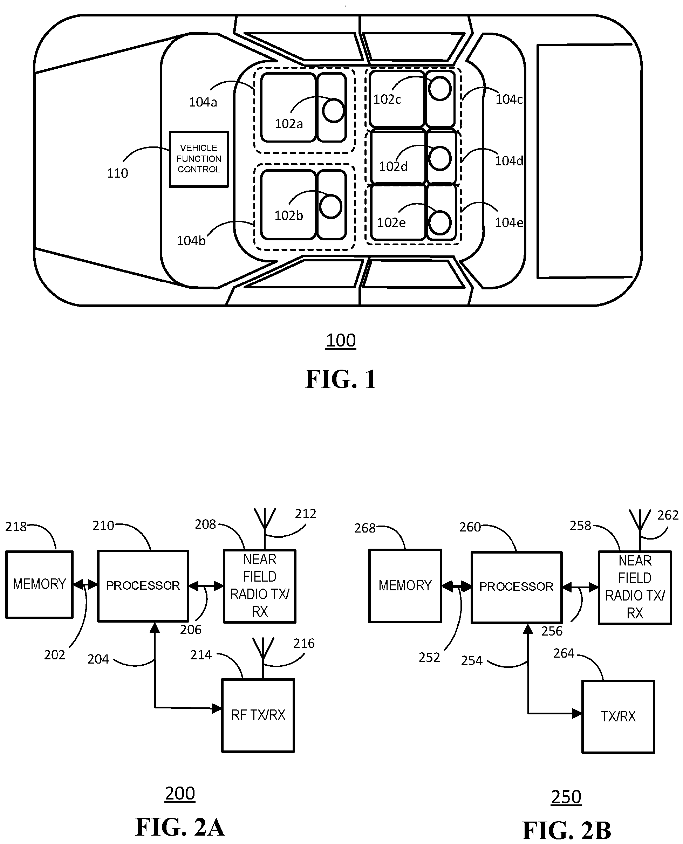

Figure 1 shows a car 100 including a vehicle function control system according to an embodiment. The vehicle function control system includes a vehicle function controller 110 and a number of seat transceivers 102a to 102e which may be located in position corresponding to each seat or each designated seating position. The seat transceivers 102a to 102e each include a near field radio transceiver which may be a near field magnetic induction (NFMI) transmitter or a near field electromagnetic induction transmitter (NFEMI). NFMI refers to any communication means that makes use of transmissions within a localized magnetic field. NFEMI is an extension of NFMI which also uses an electric antenna for transmissions as explained for example in US 9197986B1 and European Patent application 15164621.3. Each of the seat transceivers 102a to 102e may be positioned in a location corresponding to respective seating position in the car 100 and preconfigured with an appropriate location identifier corresponding to a seat or seating position within the car 100. In some examples, the location of the seat transceivers 102a-e may be in the seat itself. This is required when for example NFEMI communication is used as the communication path is via the body of the user. In other examples, for example when NFMI communication is used, the seat transceiver could for example located under each seat or seating position or above each seat or seating position. As illustrated, five transceivers are shown, however, it will be appreciated that in other examples fewer or more transceivers may be used. In some examples only one transceiver may be used which may be used to identify a user in the driver seat.

The seat transceivers 102a-e may be used to identify a corresponding personal area zone 104a-e. The vehicle function controller 110 may typically control various features in a vehicle such as heating, ventilation and air-conditioning (HVAC), lighting systems, window control, seat position, navigation systems, as well as in car audio systems and other multimedia infotainment systems typically found within a car. The vehicle function controller 110 may include a wired or wireless transceiver (not shown), such as a Bluetooth or other interface such as Control Access Network (CAN), Local Interconnect Network (LIN), Ethernet or other wired or wireless communication protocol which may be used to communicate with other devices in a vehicle.

The vehicle function controller 110 may be include a wireless transceiver such as a Bluetooth transceiver and may be wirelessly coupled to each of the seat transceivers 102a-e. Alternatively or in addition, in some examples, the vehicle function controller 110 may have a wired network connection (not shown) to the seat transceivers 102a-e.

The vehicle function controller 110 and the seat transceivers 102a-e may be implemented as hardware or a combination of hardware and software running on microprocessors or digital signal processors.

Figure 2A illustrates an example implementation of a wearable device 200. A memory 218 may be connected to a processor 210 via bidirectional connection 202. The processor 210 may have a first bidirectional connection 206 to a near field radio transceiver 208 which may be a near field radio transceiver such as for example a NFMI transceiver or a NFEMI transceiver. The near field radio transceiver 208 may be connected to an antenna 212. The processor 210 may optionally have a second bidirectional connection 204 to a radio frequency (RF) wireless transceiver 214 such as a Bluetooth transceiver. The RF wireless transceiver 214 may be connected to a second antenna 216. The mobile hearable device 200 may be implemented in hardware or a combination of hardware and software. For example, the processor 210 may be implemented by instructions executed by a digital signal processor or other microprocessor such as for example the NXP i.MX RT processor or processors with similar functionality. In some examples the second wireless transceiver 214 may be omitted.

Figure 2B illustrates an example implementation of a seat transceiver 250 which may implement each of the seat transceivers 102a-e. A memory 268 may be connected to a processor 260 via bidirectional bus 252. The processor 260 may have a first bidirectional connection 256 to a near field radio transceiver 258, for example a NFMI transceiver or a NFEMI transceiver. The near field radio transceiver 258 may be connected to an antenna 262. The processor 260 may have a second bidirectional connection 254 to a further transceiver 264. In some examples of the seat transceiver, the further transceiver 264 may be a wired network transceiver for connection to a CAN, LINN or Ethernet network. In other examples, the further transceiver 264 may be a wireless transceiver for example a Bluetooth transceiver. The seat transceiver 250 may be implemented in hardware or a combination of hardware and software. For example, the processor 210 may be implemented by instructions executed by a digital signal processor or other microprocessor.

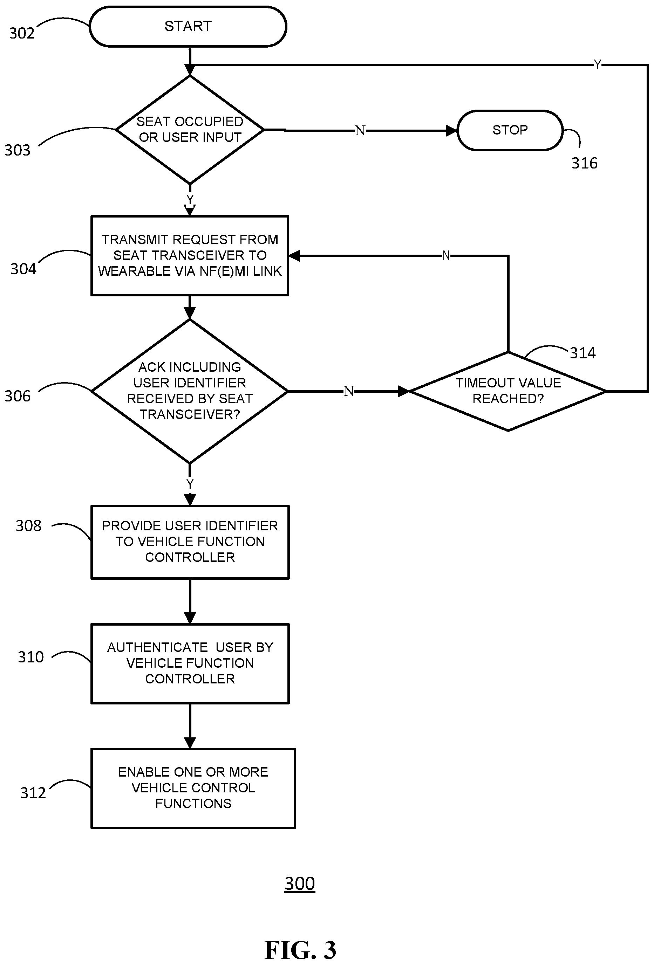

Figure 3 illustrates a method of vehicle function control 300 by a user wearing a wearable device 200 when occupying a seat in the car 100. In step 302 the method starts. In step 303, the method may perform an initial check to determine whether a seat is occupied. In some examples, this check may be done by a pressure sensor which may be coupled to the vehicle function controller 110. Alternatively or in addition, a user may provide an input via a seat user interface to indicate that the seat is occupied. If the seat is not occupied, the method may finish at step 316.

Following from step 303 if the seat is occupied, in step 304, a request may be transmitted from the seat transceiver to the wearable device via the near field radio link. In response to receiving the request, the wearable device may transmit an acknowledgement (ACK) which includes a user identifier. The user identifier may for example include one or more of a wearable device identifier, a user programmed user identifier, or a biometric signature. In step 306, the seat transceiver may check to determine whether the ACK has been received. If the ACK has not been received, the method may proceed to optional step 314 and check whether a timeout value has been reached. If the timeout value has been reached, then the method returns to step 303. Otherwise, if the timeout value has not been reached then the method returns to step 304 and a transmit request may be re-transmitted by the seat transceiver. Returning to step 306, once the seat transceiver has received the ACK including the user identifier, the method proceeds to step 308 in which the seat transceiver provides the user identifier to the vehicle function controller 110. In step 310, the vehicle function controller 110 may authenticate the user from the received user identifier. The method then proceeds to step 312 in which the vehicle function controller may enable one or more vehicle control functions depending on the result of the user identifier authentication.

The method 300 provides a direct connection between the seat occupant and the vehicle function control system. In other words, the vehicle system identified which seats are occupied and who is occupying them. This information may be utilized for customizing environment interiors within the personal seating zone and utilization of car features as preferred by the seat occupant. In some examples, in addition to configuration defaults provided from the user wearable to the vehicle function controller, a seat user interface (not shown) which for example may include a touch screen and/or microphone may be connected to the seat transceiver. The user interface together with the user identifier may be transmitted to the vehicle function controller which may permit or inhibit user command requests depending on the user identifier.

In some examples, step 303 may be omitted as the occupancy may be determined indirectly by establishing a communication link to a wearable device by periodically transmitting a request as described in step 304 and checking for an ACK as described in step 306.

Examples of control parameters include but are not limited to, seat lumbar support, seating position, mirror settings, HVAC control, interior lighting, window control, multimedia control. As illustrated and described, the vehicle function control system may be used for a car but in other examples the method 300 may be used in other larger vehicles such as vans or trucks and public transportation such as planes, trains, buses.

The initial information exchange between smart car seat and user wearable is done via short-range radio communication, for example NFEMI or NFMI wireless radio communication. This enables an automated reliable connection between the car seat or seat location and user wearable. Furthermore a local communication bubble may be defined around the smart car seat (NFMI), or communication between seat and wearable via human body communication (NFEMI). This extremely localised communication may allow the co-existence of multiple/many communication channels within the same vehicle. In contrast, longer range RF communication for example using Bluetooth LE may result in packet collisions between the channels. Using NFMI or NFEMI communication may allow the method to be scaled to large numbers of seats for example in public transport vehicles. In the present disclosure, the term short-range communication refers to communication between transceivers having a range of less than 1 metre.

The user authentication provides a means to enable/disable control of car features (or configuration settings) per user/seat. This may enable user-specific control of navigation function in owned vehicles, fare payments in (autonomous) taxi's or public transport, or parental control. Moreover, when a person does not wear the wearable, this may be detected by the absence of an ACK signal and consequently some configuration features may be disabled.

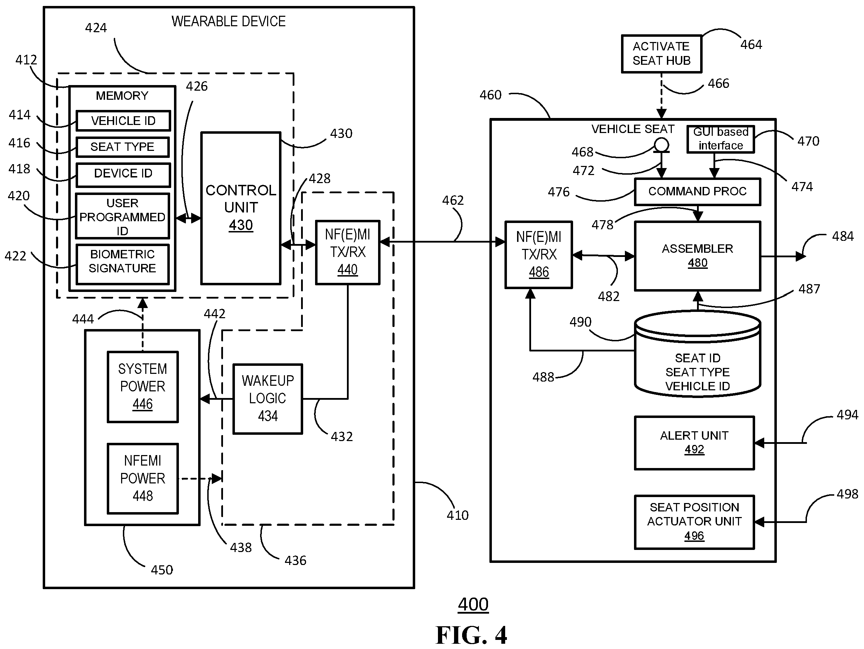

Figure 4 shows a vehicle function control system 400 according to an embodiment. The vehicle function control system 400 includes a wearable device 410 and a vehicle seat 460. The wearable device 410 may include a memory 412, a control unit 430, an NF(E)MI transceiver 440, wake-up logic 434, and a power control module 450. The memory 412 may be configured to store one or more vehicle identifiers 414, one or more seat types 416, user identification data which may include one or more of a device ID 418, a user programmed ID 420 and a biometric signature 422. In some examples the vehicle identifier(s) 414, a seat type(s) 416, and user identification data may be stored in different memories.

A seat type 416 may for example be adjusted on one or more of the following parameters: seat X,Y,Z position, angle of backrest, height adjustable lumbar support, headrest position, or seat heating settings. A given type of seat can be used in one or more cars, and the seat type information 416 in memory 412 may also store the seating defaults for each user.

The vehicle identifiers 412 may include associated configuration parameters e.g. mirror settings, multimedia system related settings (e.g. user preferred list of radio stations), climate control settings. There may be multiple (different) vehicle identifiers 412 or given set of vehicle identifiers 412 for which default user configuration parameters are stored.

The user identifier information may provide a unique tag for a given person, for performing a user authentication to enable certain functions in the car (e.g. a digital Key or Password). While every user may be authorized to change seating position of the seat occupied, some users may not be authorized to configure other functions such as navigation control. In some examples, at least part of the user identifier data includes the biometric signature 422 which may be dynamically collected by the wearable device 410 using an appropriate biometric sensor (not shown) coupled to the memory 412. In some examples, the biometric signature may be a fusion of information provided by ECG (electrocardiogram) signals and EMG (Electromyogram) physiological recordings from sensors as explained for example by Belgacem et al in "a novel biometric authentication approach using ECG and EMG signals" Journal of Medical Engineering and Technology Volume 39, 2015 - Issue 4. In some example a continuous user authentication scheme may be implemented for example by exploiting a user's pulsatile signals from the photoplethysmography (PPG) sensor in commercial wrist-worn wearables as described by Zhao et al in "TrueHeart: Continuous Authentication on Wrist-worn Wearables Using PPG-based Biometrics", IEEE Infocom 2020 - IEEE Conference on Computer Communications 6th July 2020 pp 30-39.

The memory 412 may be connected by bidirectional connection 426 to the control unit 430. The control unit 430 may be connected by bidirectional connection 428 to the NF(E)MI transceiver 440. The NF(E)MI transceiver 440 may have an output 432 connected to the wake-up logic 434. The wake-up logic 434 may have an output 442 connected to the power control module 450. Power control module 450 may include a system power module 446 and an NF(E)MI power control module 448. The system power module 446 may provide power as indicated by dashed line 444 to the power domain 424 which includes the memory 412 and the control unit 430. The NF(E)MI power control module 448 may provide power as indicated by dashed line 438 to the "always on" power domain 436. The "always on" power domain 436 may include the NF(E)MI transceiver 440 and the wake-up logic 434.

In some examples, the NF(E)MI radio transceiver 440 may be an NFMI radio and in other examples the NF(E)MI radio transceiver 440 may be an NFEMI radio. A NFMI radio creates a 'local' communication bubble around the smart car seat, which greatly mitigates interference in case of multiple seats are occupied with the car. NFMI radio further offers low-power consumption and can connected the wearable to the occupied car seat without requiring a pairing process. Alternatively, a NFEMI radio may be used to couple a seat transceiver to a wearable using the users body as part of the communication channel, thereby indicating reliably that the user is occupying the seat.

The NF(E)MI transceiver 440 wakes up the related portion of the wearable in response to a request from a further device.

The control unit 430 may provide the user preferred settings from the wearable device, in response to a request for a particular vehicle ID and seat type via the NF(E)MI radio channel. The control unit 430 may assemble user identification data including one or more of the device ID, user programmed ID and biometric ID and transmit the user identifier data via the NF(E)MI transceiver 440.

NF(E)MI transceiver 440 in the wearable device 410 is powered by Always On NFEMI power module 448, and the rest of the related circuit portion is powered by System Power module 446. The activated NF(E)MI link 462 enables the wake up logic 434. Wake up logic 434 triggers the system power module 446 to power the circuitry in the power domain 424 as part of the wearable device 410. The control unit 430 may be connected to the system power module 446 (not shown) and may be configured to power down the system power domain 424 once the data has been provided via the NF(E)MI link 462.

The vehicle seat 460 may include a graphical user interface (GUI) 470 having an output 474 coupled to a command processor 476. A microphone 468 may have an output 472 coupled to the command processor 476. The command processor 476 may generate user interface (UI) commands from either voice commands or commends received via the GUI 470 or other user interface such as buttons or switches (not shown). The output of the command processor 478 may be connected to an assembler module 480. The assembler module 480 may have a bidirectional connection 482 to an NF(E)MI transceiver 486. The assembler module 480 may have an output 484 which may be connected via a network connection (not shown) to a vehicle function controller (not shown). The assembler module 480 assembles the data received via NF(E)MI transceiver 486, and data from command processor 476 and appends the data with a field to identify whether the instruction is a special instruction or normal instruction. The NF(E)MI transceiver 486, the assembler module 480, and the memory 590 may implement at least part of a seat transceiver, for example the seat transceiver 102a illustrated in figure 1.

The data received via NF(E)MI transceiver 486 may be assembled as a special instruction which may include the user preferred defaults which are typically set at the moment that the seat is occupied. The data from the command processor 476 is assembled as a normal instruction. The user may modify the original default settings dynamically on as-needed basis. The packetized data may be provided via the assembler output 484 to the vehicle function controller (not shown).

The vehicle seat 460 may include a memory 490 may store a seat identifier which may indicate the location of the seat or seating position, a seat type, and a vehicle identifier. The memory 490 may have an output 487 to the assembler module 480. The memory 490 may have an output 488 to the NF(E)MI transceiver 486. The vehicle seat 460 may further include an alert unit 492 which may have an input 494 connected via a network connection (not shown) to a vehicle function controller (not shown). The alert unit 492 may generate an alert signal which may be a video, audio or vibration alerts, to signal a particular event to the seat occupant (e.g. when approaching a destination).

The vehicle seat 460 may also include a seat control actuator unit 496 having an input 498 connected via a network connection (not shown) to a vehicle function controller (not shown). The seat position actuator unit 564 may receive a command on input 498 from the vehicle function controller to control the seat to adapt the seating position. An activate seat hub module 464 may activate the components in the vehicle seat 460 indicated by the dashed line 466. The activate seat hub module 464 may detect whether a seat is occupied for example from a pressure sensor located in the seat or visual recognition method. The activate seat hub module 464 may be part of the vehicle function controller. The respective NF(E)MI transceiver 440 and the wearable device 410 and the NF(E)MI transceiver 486 in the vehicle seat 460 may form an NF(E)MI communication link 462.

The vehicle function control system 400 may provide a unique electronic identification means for seats inside a vehicle and unique electronic identification means for user authentication of seat occupants.

The wearable device 410 may provide user identification data, user-preferred configuration defaults for car features, and a communication channel with a vehicle seat via NF(E)MI

The vehicle seat 460 may provide seat occupancy detection, and a communication channel with user wearable device 410 via NF(E)MI. A seat user interface, for example using voice command or via GUI to collect (modified) user-preferred configuration settings for vehicle features, an assembler module unit 480 to packetize data receive from Seat UI and/or wearable and a wired or wireless communication channel with vehicle function controller (not shown) to provide packetize data.

The vehicle function controller (not shown) may provide the following functionality: user authentication per seat, provision to enable/disable certain vehicle feature control per user and/or seat, and control of personalized zones for each seat in the vehicle.

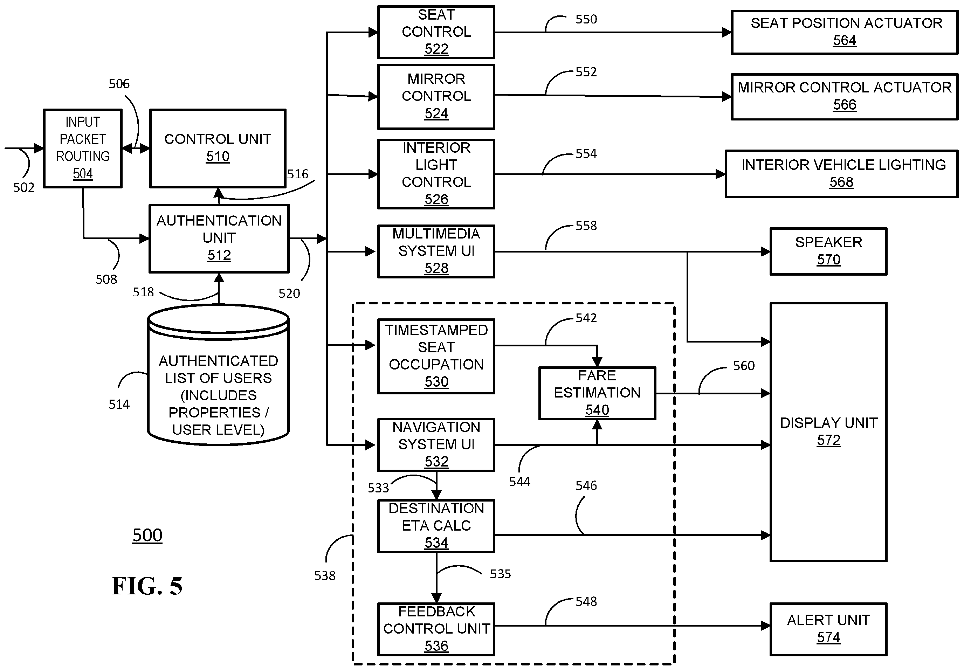

Figure 5 shows a vehicle function controller 500 according to an embodiment. A user data input 502 which may be connected via a network interface (not shown) to a vehicle seat transceiver (not shown) may be connected to an input packet router 504. An output 508 of the input packet router 504 may be connected to authentication unit 512. The input packet router 504 may have a bidirectional connection 506 to a control unit 510. An output 516 of the authentication unit 512 may be connected to the control unit 510. A memory or storage unit 514 may include an authenticated list of users which may include user properties and/or user authentication level. The memory 514 may have an output 518 connected to the authentication unit 512. The authentication unit 512 may have an output 520 connected to a seat controller 522, a mirror controller 524, an interior light controller 526, a multimedia system user interface 528, a timestamp seat occupation module 530, and a navigation system user interface 532.

The timestamp seat occupation module 530, and the navigation system user interface 532 may be part of a navigation unit 538. The navigation unit 538 may also include a destination expected time of arrival (ETA) calculation module 534, a feedback control unit 536, and a fare estimation module 540 for use if the vehicle is a taxi for example. The timestamp seat occupation module 530 may have an output 542 connected to the fare estimation module 540. The navigation system user interface module 532 may have a first output 533 connected to the ETA calculation module 534 and a second output 544 connected to the fare estimation module 540. The fare estimation module 540 may have an output 560 connected to a display unit 572. The navigation system user interface 532 may have an output 544 connected to the display unit 572. The destination ETA calculation module 534 may have an output 546 connected to the display unit 572. The destination ETA calculation module 534 may have an output 535 connected to the feedback control unit 536. Feedback control unit 536 may have an output 548 connected to the alert unit 574.

The seat controller 522 may have a seat control output 550 to control a seating position actuator 564 which may be included in seat position actuator unit 496. As illustrated the seat controller 522 controls one seat position actuator 564 for one seat. However, it will be appreciated the seat controller 522 may independently control respective seat actuators in other seats (not shown) which the seat controller may determine from the seat identifier for each seat.

The mirror controller 524 may have mirror control output 552 to the mirror actuator 566. The mirror controller 524 will typically only be activated by the driver seat which may be determined from the seat identifier. The interior light controller 526 may have an interior light controller output 554 which may control car interior lighting 568. The interior light controller may determine which interior lights to control based on the seat identifier. The multimedia system user interface 528 may have a output 558 connected to a speaker 570 and also optionally be connected to the display unit 572.

In operation, the input packet router 504 receives the data packets from a given vehicle seat 460. Special instructions are always routed to both authentication unit 512 and control unit 510. Normal instructions are only routed to the control unit 510.The storage unit 514 includes the list of authenticated users, potentially extended with their biometric signatures. The authentication unit 512 authenticates the user based on the information provided by the special instruction and the signatures from storage unit. A user may be authenticated to allow configuration of given vehicle features which may be application dependent (e.g. authentication may be different in an owned vehicle as opposed to an autonomous taxi).

The control unit 510 provides the settings to the respective vehicle feature controller units based on the information received in the data packets.

Once a user has occupied a given seat, a special instruction is compiled by the smart car seat based on user preferred default configuration parameters as provided by the wearable device. The special instruction is received by the vehicle electronics, which perform user authentication and propagating the default settings to the respective vehicle feature controller units, for example seat controller 522, mirror controller 524. A user may make use of the seat user interfaces, for example microphone 468 and GUI 470, to alter the configuration setting of a vehicle car feature. Some vehicle feature controllers may be controllable either from the wearable device 410 or the vehicle seat user interfaces. Some vehicle feature controllers may only be controllable from the vehicle seat user interfaces.

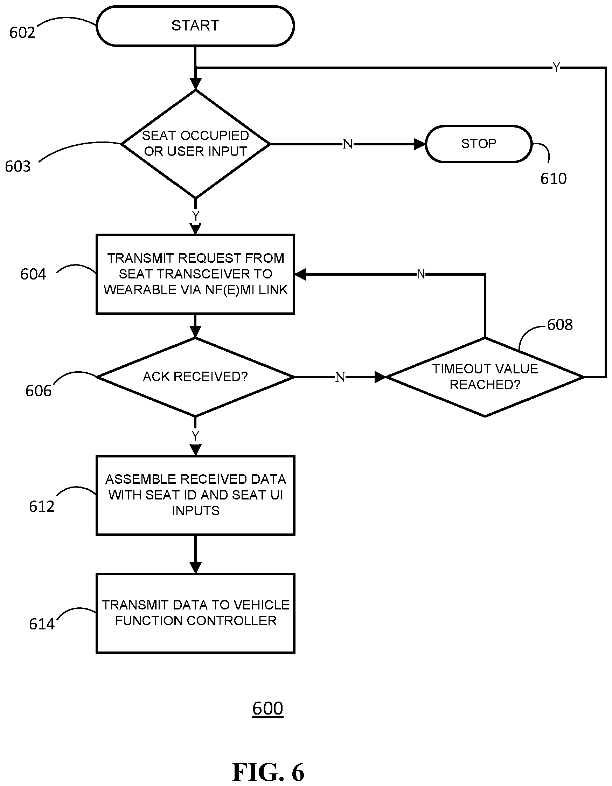

Figure 6 shows a method of data communication 600 between vehicle seat 460 and wearable device 410. In step 602 the method starts. In step 603, the method may perform an initial check whether a seat is occupied. In some examples, this may be done by a pressure sensor or other sensor which may be coupled to the vehicle function controller. Alternatively or in addition, a user may provide an input via a seat user interface to indicate that the seat is occupied. The step 603 may be implemented for example by the seat activation module 464. If the seat is not occupied, the method may finish at step 610.

When the seat is occupied, the method proceeds to step 604 and the seat transceiver requests the user identification data and preferred configuration settings from the wearable. The activated NF(E)MI transceiver 486 of the vehicle seat 460 may sends the request signal to the wearable device 410 with vehicle ID and/or seat type as arguments retrieved from the memory 490. The NF(E)MI radio 440 of the wearable device 410 may receive the request signal, wake-up the remaining portion of the wearable, and provide the vehicle ID and seat ID to the control unit 430. The wearable device 410 may acknowledge the request by transmitting packetized data consisting of a user identifier which may include one or more of a biometric signature and other user identification together with a vehicle ID and/or seat type parameters through NF(E)MI link 462. In step 606 the smart car seat 460 may poll for an ACK signal from the wearable device 410 for a programmed time duration. If no ACK signal has been received, the method may check in step 608 whether a timeout value has been reached. If the time out value has been reached, the method may return to step 603. If the timeout value has not been reached then the car seat returns to step 604 and re-sends the request. For a successfully received an ACK signal from the wearable at smart car seat, the method proceeds to step 612 and the assembler module 480 assembles the data into a special instruction. The packetized data is then transmitted to vehicle function controller in step 614.

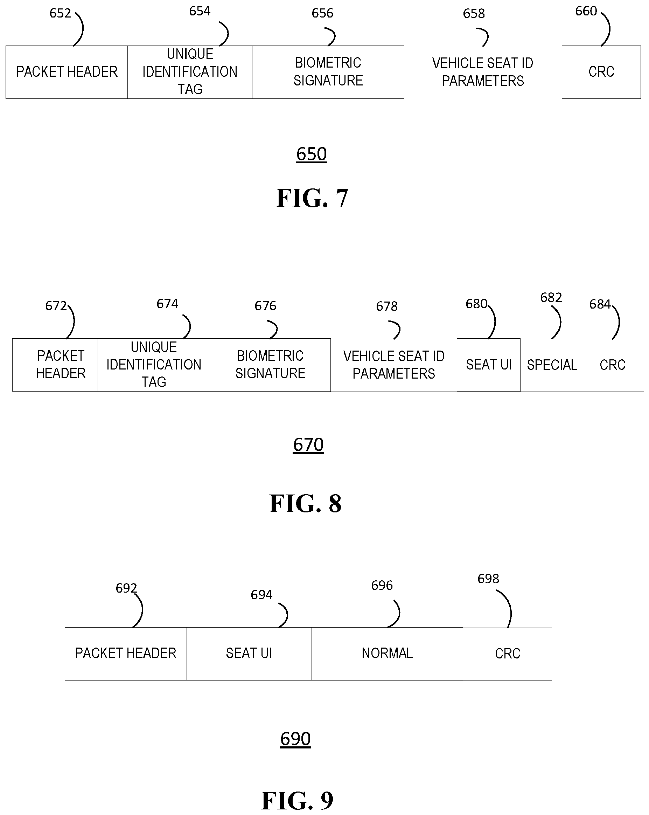

Figure 7 shows an example data packet frame 650 for data from the wearable to the smart car seat. Data packet frame 650 includes a packet header 652, unique identification tag 654, biometric signature 656, vehicle seat ID parameters 658 and CRC 660.

Figure 8 shows an example special instruction data packet frame 670. Data packet frame 670 includes a packet header 672, unique identification tag 674, biometric signature, 676 vehicle seat ID parameters 678, seat user interface command 680, special instruction field 682 and CRC 684.

Figure 9 shows an example normal data packet frame 690. Data packet frame 690 includes a packet header 692, seat user interface command 694, normal field 696 and CRC 698.

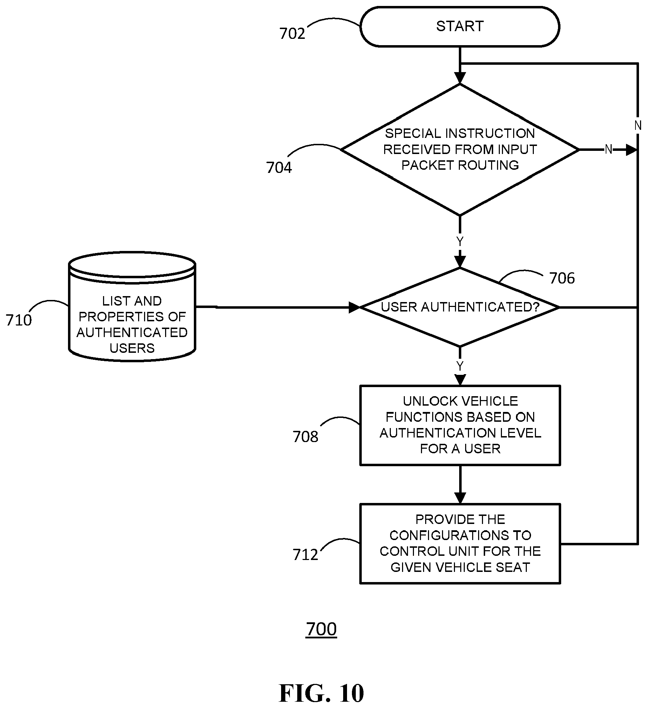

Figure 10 shows a method of authentication 700 implemented by vehicle function controller 500. The method starts in step 702. In step 704 a check is made as to whether a special instruction is received from the vehicle seat. If a special instruction has not been received, the method remains at step 704. If a special instruction has been received, the method proceeds to step 706 where the authentication unit may check for validity of the user from the list of authenticated users 710. Once the authentication is completed in step 708 vehicle functions are unlocked for a successfully authenticated person. Each functional unit can have different levels of authentication. User instruction is validated to check for authenticity for each functional block and the user allowed only for those functions authenticated to control. In step 712, the configurations are then provided to control unit for the given vehicle seat to individual functional units. Following step 712, the method may return to step 704.

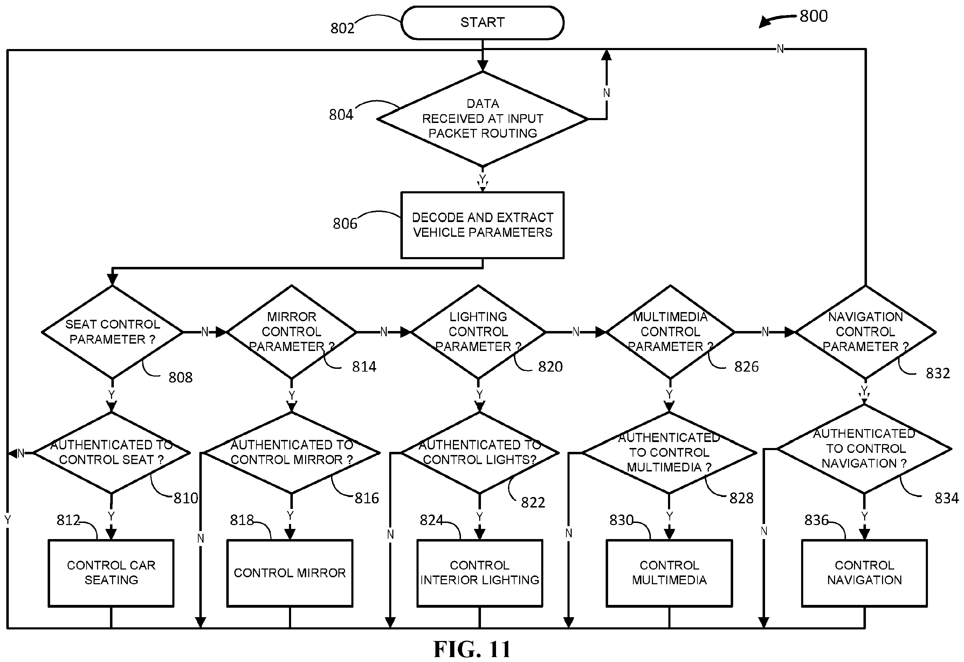

Figure 11 shows a method for configuring individual functional units 800 in the vehicle using vehicle function controller 500. The method starts at step 802. At step 804, the input packet is received and checked If the data does not contain an instruction, the method remains at step 804. If an instruction has been received, then in step 806 the received input packet is decoded and extracted with parameters for individual functional units in car. The extracted parameter is checked at the relevant controllers if the settings are appropriate for that control unit. Also, the method checks if the user is authenticated to control the individual functional unit. For successful authentication, the configurations are applied to the individual control units.

As illustrated, following the decode an extraction step 806 a check is made in step 808 if the vehicle parameter is a seat control parameter. If the parameter is a seat control parameter then in step 810 the method checks whether the user is authenticated to control the seat. If the user is authenticated to control the seat then in step 812 the car seating is controlled. Otherwise in step 810 the method returns to step 804 and the next packet is received.

Returning to step 808, if the parameter is not a seat control parameter then in step 814 a check is made if the vehicle parameter is a mirror control parameter. If the vehicle parameter is a mirror control parameter then in step 816, the method checks whether the user is authenticated to control the mirror. If the user is authenticated to control the mirror then in step 818 the mirror controller is enabled. Otherwise in step 816 the method returns to step 804 and the next packet is received.

Returning to step 814, if the parameter is not a mirror control parameter then in step 820 a check is made if the vehicle parameter is a lighting control parameter. If the vehicle parameter is a lighting control parameter then in step 822, the method checks whether the user is authenticated to control the lighting. If the user is authenticated to control the lighting then in step 824 the lighting control is enabled. Otherwise after step 822 the method returns to step 804 and the next packet is received.

Returning to step 820, if the parameter is not a lighting control parameter then in step 826 a check is made if the vehicle parameter is a multimedia control parameter. If the vehicle parameter is a multimedia control parameter then in step 828, the method checks whether the user is authenticated to control the multimedia system. If the user is authenticated to control the multimedia then in step 830 the multimedia controller is enabled and controlled according to user commands. Otherwise after step 828 the method returns to step 804 and the next packet is received.

Returning to step 826, if the parameter is not a multimedia control parameter then in step 832 a check is made if the vehicle parameter is a navigation control parameter. If the vehicle parameter is not a navigation control parameter, then the method returns to step 804. If the vehicle parameter is a navigation control parameter then in step 834, the method checks whether the user is authenticated to control the navigation unit. If the user is authenticated to control the navigation unit then in step 836 the navigation unit is enabled and controlled according to user commands. Otherwise after step 836 the method returns to step 804 and the next packet is received.

As shown the instruction checks to determine the type of control parameters i.e. seat, mirror, lighting, multimedia and navigation or done sequentially. It will be appreciated that in other examples, the check can be done in parallel.

Embodiments of the vehicle function control system and method may be used in automotive vehicles. In addition to private vehicles, the vehicle function control system and method may also be utilized in (autonomous) taxi's to cover navigation, fare estimation, and destination alert features.

Embodiments of the vehicle function control system and method may be used passenger airplanes. Today, planes already make use of personal comfort zones for each seat. Additionally, there exists already a personal infotainment system for each seat. Embodiments of the vehicle function control system and method verify who is seating on which seat from the personal identification data which may include the boarding pass information, thereby enabling new personal services e.g. connecting a service to a person regardless of his seating position instead of connecting it to one predefined seat.

Similarly, embodiments can also be deployed in other public transportation means such as trains or buses.

A method and apparatus for vehicle function control using short-range radio communications is described. A wearable device is configured to be wirelessly coupled to a seat transceiver including a near field radio transceiver. The seat transceiver is coupled to a vehicle function controller and located in a position corresponding to a vehicle seat. The wearable device includes a wireless transceiver configured as a near field radio transceiver, a processor coupled to the wireless transceiver and at least one memory configured to store a user identifier. In operation, the processor receives a request from the seat transceiver via the wireless transceiver. Once a request is received the processor transmits an acknowledge comprising the user identifier via the wireless transceiver. The user identifier is used for authentication of the user by the vehicle function controller. The vehicle function controller enables one or more user-controlled vehicle functions dependent on the authentication.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub combination.

The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

## Claims

1. A wearable device configured to be wirelessly coupled to a seat transceiver comprising a near field radio transceiver and located in a position corresponding to a vehicle seat, the seat transceiver being coupled to a vehicle function controller, the wearable device comprising:
a wireless transceiver configured as a near field radio transceiver;
a processor coupled to the wireless transceiver;
at least one memory configured to store a user identifier;
wherein the processor is configured to receive a request from the seat transceiver via the wireless transceiver and in response to transmit an acknowledge comprising the user identifier via the wireless transceiver for authentication of the user by the vehicle function controller to enable one or more user-controlled vehicle functions dependent on the authentication.

2. The wearable device of claim 1 wherein the wireless transceiver is configured as one of a near field magnetic induction, NFMI, transceiver and a near field electromagnetic induction, NFEMI, transceiver.

3. The wearable device of claim 1 or 2, wherein the at least one memory is further configured to store at least one vehicle identifier, and at least one seat type identifier; and wherein the wearable device is further configured to receive a vehicle identifier and a seat type identifier via the wireless transceiver and the processor is configured to compare the received vehicle identifier and seat identifier with the at least one vehicle and seat type identifiers and to transmit user configuration parameters via the wireless transceiver corresponding to the received vehicle identifier and seat type identifier.

4. The wearable device of claim 3 wherein the user configuration parameters comprise at least one of seating control parameters, mirror control parameters, lighting control parameters, multimedia control parameters and navigation control parameters.

5. A vehicle function control system comprising:
a seat transceiver configured to be located in a position corresponding to a vehicle seat and further configured to be wirelessly coupled to a wearable device, the seat transceiver comprising a near field radio transceiver; and
a vehicle function controller coupled to the seat transceiver and configured to be coupled to one or more vehicle actuators;
wherein the seat transceiver is configured to transmit a request via the near field radio transceiver, to receive an acknowledge comprising a user identifier from the wearable device and transmit the acknowledge to the vehicle function controller; and wherein
the vehicle function controller is configured to:
authenticate the user; and
enable at least one user-controlled vehicle function dependent on the authentication.

6. The vehicle function control system of claim 5, wherein the seat transceiver comprises at least one memory configured to store a vehicle identifier, and a seat type identifier; and wherein the seat transceiver is further configured to transmit the vehicle identifier and the seat type identifier via the wireless transceiver and to receive user configuration parameters from the wearable device corresponding to the vehicle identifier and seat type identifier.

7. The vehicle function control system of claim 5 or 6 wherein the vehicle function controller is configured to enable user-control of at least one of a seat lumbar support, seat position, mirror position, internal vehicle lighting, a multimedia system and a navigation system dependent on the user configuration parameters.

8. The vehicle function control system of any of claims 5 to 7 wherein the vehicle function controller is further configured to compare the user identifier with a list of authenticated users and allow access to vehicle functions based on the authentication level defined for the user in the authenticated user list.

9. The vehicle function control system of any of claims 5 to 9 wherein the near field radio transceiver is configured as one of a near field magnetic induction, NFMI, transceiver and a near field electromagnetic induction, NFEMI, transceiver.

10. An apparatus for vehicle function control by a user occupying a vehicle seat, the apparatus comprising the wearable device of any of claims 1 to 4 and the vehicle function control system of any of claims 5 to 9.

11. A method of vehicle function control by a user occupying a vehicle seat using a vehicle function controller coupled to a seat transceiver located in a position corresponding to the vehicle seat and a wearable device, the seat transceiver and the wearable device each comprising a near-field radio transceiver, the method comprising:
transmitting a request by the seat transceiver;
receiving the request by the wearable device;
transmitting an acknowledge comprising a user identifier by the wearable device;
receiving the acknowledge by the seat transceiver;
providing the user identifier to the vehicle function controller;
authenticating the user from the user identifier; and
enabling one or more user controlled vehicle functions dependent on the user authentication.

12. The method of claim 11 wherein the acknowledge further comprises user configuration parameters associated with at least one of a vehicle identifier and a seat identifier.

13. The method of claim 11 or 12 wherein the one or more user controlled vehicle functions comprise at least one of:
a seat position, mirror position, internal vehicle lighting, a multimedia system and a navigation system.

14. The method of any of claims 11 to 13 wherein the near-field radio transceiver comprises at least one of a near field magnetic induction, NFMI, transceiver and a near field electromagnetic induction, NFEMI, transceiver.

15. The method of any of claims 11 to 14 wherein authenticating the acknowledge further comprises determining an authentication level of the user from the user identifier and enabling user controlled vehicle functions based on the authentication level.
